# EUROPEAN PATENT SPECIFICATION

(11) **EP 3 810 983 B1**
(45) Date of publication and mention of the grant of the patent: **15.11.2023**
(21) Application number: 19735404.6
(22) Date of filing: 10.06.2019
(51) Int. Cl.: F21S 2/00, F21V 29/67, F21V 29/74, F21V 21/12, F21S 6/00, F21V 1/16, F21V 21/22, F21S 9/03, F21W 131/10, F21Y 115/10

(54) **MODULAR LIGHTING SYSTEM WITH FORCED COOLING**
MODULARES BELEUCHTUNGSSYSTEM MIT ZWANGSBELÜFTUNG
SYSTÈME D'ÉCLAIRAGE MODULAIRE À REFROIDISSEMENT FORCÉ

(30) Priority: 19.06.2018 IT 201800006433
(43) Date of publication of application: 28.04.2021
(73) Proprietor: Medici, Guido, 30175 Marghera (VE) (IT); Mauri, Walter, 9620 Hermagor (AT)
(72) Inventor: Medici, Guido, 30175 Marghera (VE) (IT); Mauri, Walter, 9620 Hermagor (AT)
(74) Representative: Vinci, Marcello
(86) International application number: PCT/IB2019/054815
(87) International publication number: WO 2019/243948

(56) References cited:
- US-A1- 2007 070 630
- US-A1- 2008 285 272
- US-A1- 2013 155 688
- US-A1- 2016 040 837
- US-A1- 2016 123 569

## Description

### Technical sector

The present patent relates to the sector of lighting. In particular, it relates to a new light and modular lighting system, characterized by the presence of a cooling system for cooling the lamp or LED light sources, with a forced air current that enables the weight and the dimension of the cooling radiators to be reduced significantly. Thanks to the features of the fabric light diffusion surface and the particular protective cap, said lighting module can be folded in compact dimensional conditions with ease of transport if emergency interventions are required and in critical environmental conditions.

Said modular lighting system because of its features is usable on stand bases that are fixed and telescopic and commercially available and can be hung to existing structures such as shelters, projecting beams, tree branches, so that one or more of said modules - easily stackable or hookable to one another - can multiply the lighting power according to needs, constituting in its entirety a single lighting column.

### Prior Art

Lighting products are known having stand bearing structures which comprise traditional-type lighting towers provided with a metallic structure having a telescopic vertical extension with floodlights, projectors and reflectors fixed on the top. These lighting systems are generally mono-directional - projecting the light within a defined arc - and the light source is dot-shaped, constituted by one or more light sources together with one or more reflectors. Though they concentrate the light intensity and improve performance locally, these systems have a high dazzle index.

As well as these traditional systems, there exist lighting systems constituted by a stand bearing structure on the top of which are located one or more light sources surrounded by diffusers for example made of fabric or opaque plastic elements having a spherical or hemispherical shape. These are solutions constituted by single products provided with a determined delivered lighting power. It follows that - in order to increase the lighting power - it is necessary to arrange on the ground a plurality of lighting units or increase the rated power of the light sources used.

Almost all these said lighting systems use light sources provided with one or more high-power LED (Light Emitting Diode) modules. Prior art lighting systems are known from US 2008/285272 A1, US 2007/070630 A1, US 2013/155688 A1, US 2016/040837 A1 and US 2016/123569 A1.

### Summary of the invention

One basic problem to which the present invention provides a solution relates to the cooling principle of said high power LED (Light Emitting Diode) modules, which will henceforth be referred to simply as "LEDs". It is in fact known that high-power LEDs emanate a great deal of heat that has to be appropriately dissipated so that said LEDs maintain working temperature values within the maximum admissible threshold stated by the constructing company, which once exceeded reduces the working life of the LED significantly, or cancels it. To obviate this drawback, heat dissipators are used which are constituted by aluminium plates provided with heat dispersion fins that are henceforth here referred to as "radiators". Obviously, the greater the lighting power of the LED, the greater proportionally the thickness and the dimension of the fins must be. As a result, the weight and dimension of the radiator are proportionally greater.

The invention as defined by the appended claims overcomes and obviates the cited drawbacks.

With regard to the issue of cooling LED light sources, our invention can reduce significantly the dimension and weight of the radiator by suitably using the circulation of forced air as a complementary cooling system. This circulation of forced air occurs through the use and precise positioning of electric fans and suitable aeration holes.

The use of cooling fans in fact enables more rapid cooling of the radiator and therefore use of a smaller radiator, having a more limited and lighter thickness.

Other characteristic aspects and advantages of the new lighting system are:
- the particularity of the light diffusion system;
- the modularity of the invention for the purposes of adapting the configuration thereof to different needs of the user;
- the reducibility of the dimensions of the invention for easy transport and storage.

It is known that in order to reduce dazzle from a light source using a light diffusion surface, made of plastic or another rigid material, it is necessary for the dimension of the surface to be adequately proportioned to the intensity of the light source. It follows that the greater the lighting power delivered the larger the diffusion surface must be. Our lighting system has wide and variable light diffusion surfaces made of flexible fabric where the single components of the lighting module can be easily removed, folded or otherwise used in order to reduce the invention to minimum storage and transport dimensions.

Another aspect of the invention is the lack of structural elements on the diffuser fabric such as splints, stiffeners or other elements, the task of which is to maintain the original geometric shape even in the presence of wind. It is in fact known that the fabrics used as diffusers, inasmuch as they are flexible, with spherical or hemispherical shapes, must be reinforced with injection of pressurised air in the casing or by providing the fabric with ribbing made of flexible splints or other solutions. Our lighting system instead includes the use of toroidal cylindrical or conical geometric shapes having appropriate counterweights so that the shape is maintained by simple gravitational force of the counterweight on the bottom with the use of only one elastic catch.

Another aspect of the invention is the presence of structural elements and electrical connections that are such that one or more lighting modules of standardised dimension provided with a light diffuser can be assembled, stacked or hung on one another to create a lighting column which can reach variable heights according to the number of modules stacked, and therefore deliver high values of luminosity in response to needs. Another aspect included in this patent relates to the possibility of installing the lighting modules on stand structures - fixed or telescopic, known and present on the market - or hanging said lighting modules on existing structures such as shelters, projecting arms, roofs, tree branches, etc.

Another aspect of the invention consists of the fact of being able to structure the modules in such a manner that the light beam is oriented upwards or downwards, and of further being able to make a light column formed of one or more modules with a pair of opposite light sources oriented upwards and downwards.

The appended drawings illustrate by way of non-limiting example a practical realisation of the invention.

### Main elements constituting the invention

FIG. 1 shows the modular lighting system (1) of the present patent installed on a stand support with one (Fig. 1a), two (Fig. 1b) and three (Fig. 1c) modular elements where the single lighting modules (1) are stacked on the stand bearing structure (2) that is appropriately braced with suitable cables (3) anchored on the ground.
FIG. 2 shows the same modular lighting system with one (Fig. 2a), two (Fig. 2b) or three (Fig. 2c) modular elements connected together but hung on an exemplary projecting arm. The single lighting modules (1) are hung to the exemplary arm (4) and connected to one another and to the arm with ropes, cables or chains (5).
FIG. 3 illustrates - by way of non-limiting example - the functional structure of the lighting module equipped for example with LEDs (19) that orient the light downwards.
FIG. 4 illustrates - by way of non-limiting example - the functional structure of the lighting module equipped for example with LEDs (19) that orient the light upwards.
FIG. 5 illustrates - by way of non-limiting example - the functional structure of the lighting module equipped for example with a double set of LEDs (19) that orient the light in both directions.

Regardless of the position of the light sources the lighting module (1) consists of the following main elements and of what is specified in greater detail in the following pages:
- at least one support (7) made of heat conducting material in the shape of a circular crown or circle provided with one or more aeration holes (8);
- at least one heat dissipating plate (9), of square (not according to the invention) or round shape, applied adhering totally or partially to a face of said at least one support (7); said dissipating plate (9) having preferably overall dimensions lower than those of the support (7) and provided with dissipating fins (10);
- one or more lamp or LED light sources with high lighting power (19) fixed to said dissipating plate (9);
- one or more fans (20) mounted on said support (7) aligned on said one or more aeration holes (8), for forced cooling (20) of said heat dissipating plate (9) and of said dissipating fins (10); on said fans (20) one or more filters or nets (20a) are further preferably mounted to protect the fans (20) from powder and insects.

The module (1) further comprises a protection and containing cap (6) of the electrical system and the components of the lighting module (1); said cap (6) having for example a cylindrical or conical round shape, of a diameter greater than that of said support (7).

Said cap (6) is preferably provided with at least one female electrical power supply socket (13) that is appropriately provided with a sealed closure when not in use. The electric current conveyed along the cable from the plug (12) reaches said socket (13) and enables connecting and powering - as well as said LEDs (19) of the module (1)-also a second lighting module (1) immediately above the first.

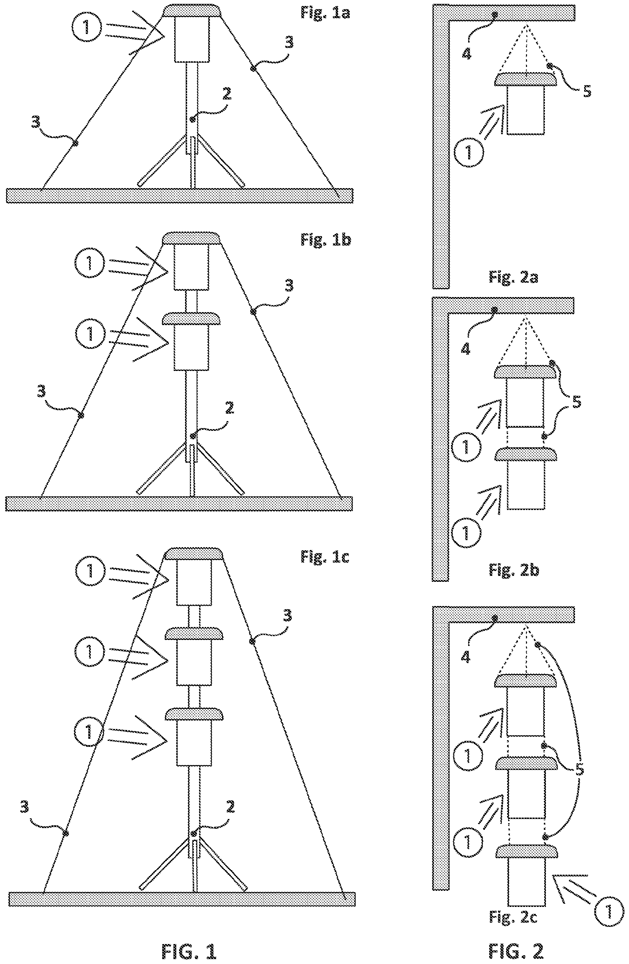

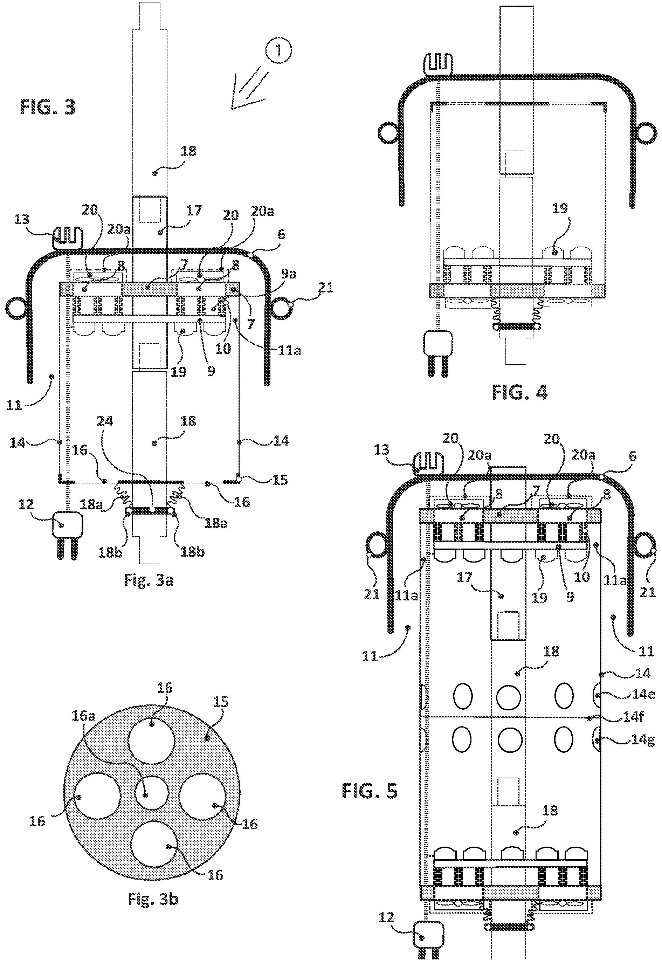

Said cap (6) is further appropriately provided also with suitable seal rings (21) to be able to hang the module with cables (FIG. 2) (5) or to anchor the structure to the ground with the bracing cables (FIG. 1 and 3).

Said module (1) further comprises at least one light diffuser (14), for example made of a fabric with a generally tubular shape.

In the solution shown in figures 3a and 3b, to ensure the maintenance in position and the tensioning of said diffuser (14), the module (1) also comprises appropriately a lower aeration plate (15) provided with a central hole (16a) and with one or more aeration holes (16), and wherein on said lower aeration plate (15) the lower edge of said diffuser (14) is anchored.

The module (1) also preferably comprises:
- one or more traction bands (18a) anchored on said lower aeration plate (15) and on rings or hooks (18b) placed on the prolonging segment (18) or on a catch (24) so that the fabric constituting said light diffuser (14) is maintained constantly taut;
- at least one engaging segment (17) for stacking other upper and lower lighting modules and enabling the lighting module (1) to be completed and stacked on a stand bearing structure by prolonging segments (18).
- one or more prolonging segments (18) that enable the height of the module (1) to be increased or reduced and/or several modules (1) to be stacked on one another.

FIG. 5 illustrates - by way of non-limiting example - the variations when the module is equipped with a double set of LEDs (19) placed at the top and bottom. In this case - all the other elements remaining in place - the aeration plate (15) is replaced by the set of elements located in the upper part: support (7), fans (20), filters (20a), heat dissipating fins (10), heat dissipating plate (9). In this case the engaging segment (17) replaced by a possible second prolonging segment (18) is excluded.

In the condition illustrated in FIG. 5 - for the purposes of the correct operation of the forced air cooling system - the variation relating to the light diffuser (14) explained below is particularly important. The light diffuser (14) is in this case provided with a central dividing wall (14f) that divides the module into two parts: an upper part and a lower part. Said dividing wall (14f) is provided with a central hole so that the prolonging segments (18) can slide and pass. Said light diffuser (14) is further provided, in the upper part and in the lower part, with one or more aeration holes (14e)(14g) that are appropriately arranged and sized.

### Functional relationship between the main elements

By way of non-limiting example the specific features of the mentioned elements and the functional relations between said elements are illustrated.

The fins (10) and the heat dissipating plate (9) with relative lighting LEDs (19) are all placed on the support (7). The LEDs (19) are powered by supply via cable and plug (12). Said plug (12) carries the supply current also to the female socket (13) located on the cap (6) so that also a second module above the first stacked with the prolonging segment (18) on the engaging segment (17) can be supplied by connecting the plug (12) to the socket (13).

The cap (6) is advantageously fixed on the engaging segment (17) and has a greater diameter than the light diffuser (14) so that a free space (11) is present between said light diffuser (14) and the cap (6), through which the air aspirated by the fans (20) can pass and flow freely.

One or more aeration holes (8) are located on the surface of the support (7). The heat dissipating plate (9) with the heat dissipating fins (10) is located beneath the support (7). The diameter of the support (7) is greater than the diameter of the heat dissipating plate (9) so that between the light diffuser (14) and the heat dissipating plate (9) a free space (11a) is created through which the air blown by the fans (20) can pass. The LED lighting modules (19) are located in contact with the lower surface of the dissipating plate (9). When the LEDs are lit up they transmit the heat to the plate (9) and to the dissipating fins (10).

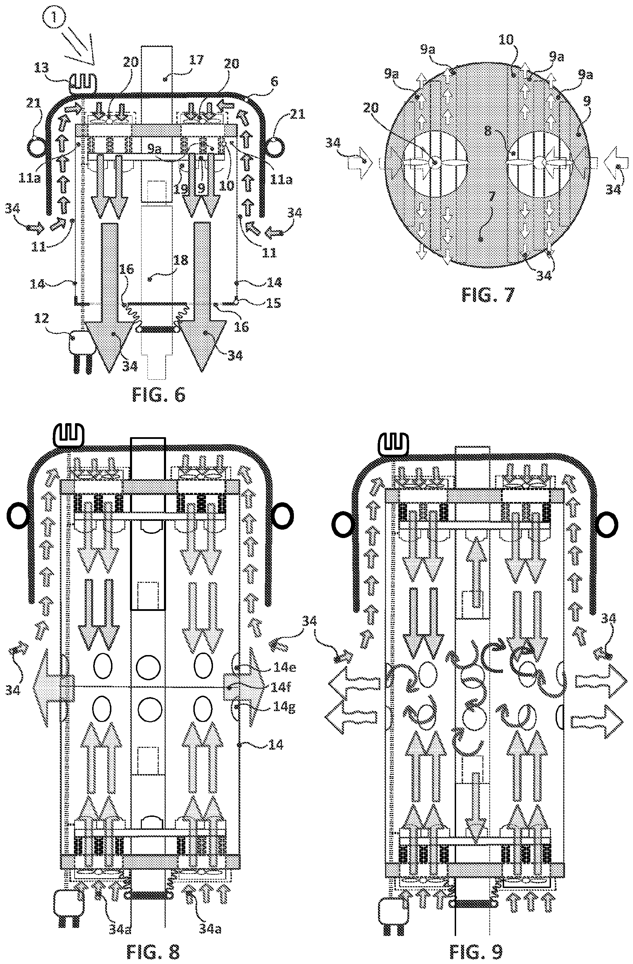

FIG. 6 schematically and non-limitingly illustrates the constituting elements of the forced-air cooling system. In said case of forced cooling, one or more cooling fans (20) are located on the aeration holes (8) of the support (7), which fans (20) can act in both aspiration and thrust.

In the arrangement combination of Figures 6 and 7, the forced-air cooling system is briefly illustrated, with forced air ventilation in a downwards direction. In said diagram, the fresh air flow (34) enters laterally from the free space (11), aspirated by the action of the fans (20) which thrust the air into the enclosed conduits (9a) between the heat dissipating plate (9), the dissipating fins (10) and the support (7). The air exits laterally and enters the light diffuser (14) passing through the space (11a) and then exiting through the aeration holes (16) of the aeration plate (15). The fans can also rotate in a contrary direction with respect to the diagram illustrated; in this case the forced air flows must be understood to be inverted with intake through the holes (16) of the plate (15) and outlet through the lateral free spaces (11).

FIG. 8 illustrates the forced circulation of air if the module contains the LEDs in both the upper and the lower part. In this case, the intake air flow (34) of the upper part is separated from the intake air flow from the lower part (34a) by the dividing wall (14f) and the hot air exits separately from the holes located in the upper part (14e) and in the lower part (14g). The separation between the two parts by the presence of the dividing wall (14f) is important for optimizing cooling. FIG. 9 illustrates schematically the possible effects of the absence of the dividing wall (14f). In this case, there would be a clash between the two currents of forced air - descending and ascending - with consequent formation of turbulence and effects of hot air returning to the LEDs (19) with consequent reduction of cooling efficacy.

### Specificity of the light diffuser

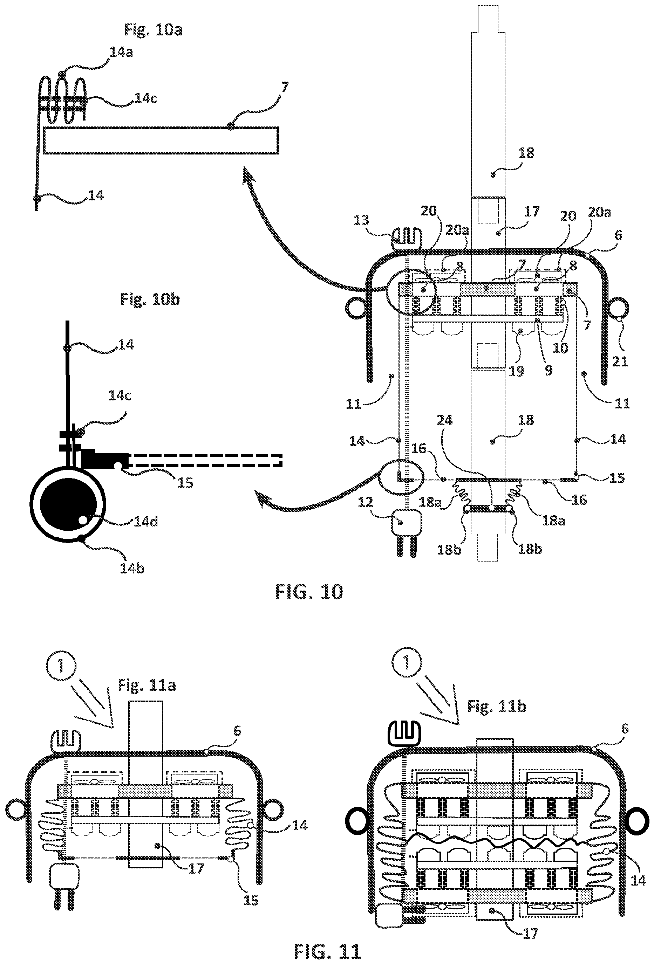

Another aspect that the patent includes is illustrated in FIG. 10 that discloses the feature of the system hooking the light diffuser (14) to the support (7) and to the aeration plate (15).

In the details illustrated in Fig. 10a and in Fig. 10b said light diffuser (14) is connected to the support (7) and to the aeration plate (15) through simple resting on the thicknesses (14a) and (14b) so that the light diffuser (14) can be easily mounted and/or dismantled by exerting simple manual pressure. The resting thicknesses 14a and 14b specified in Figs 10a and Fig. 10b are made - by way of non-limiting example - by creating several folds and/or overlaps of the fabric (14a) that are fixed with appropriate stitching (14c) and/or by inserting a stiff profile (14d) into a suitable pocket. It remains understood that such solutions are also applied in the case of the module equipped with a double set of LEDs, as indicated in FIG. 5.

The advantage of said solution consists of the possibility of changing and/or performing maintenance on the diffuser (14) fast and without having to resort to any type of technical equipment.

Another advantage resulting from the preceding advantage is that the lighting module (1) can be equipped with a set of light diffusers (14) of different colour, consistency, print or patterns that are easily interchangeable.

Another advantage resulting from the preceding advantage is that as the dazzling effect of the light sources is inversely proportional to the dimension of the surface of the diffuser (14), as a result, the user can quickly install diffusers (14) of differing heights so that the anti-dazzle effect of the module (1) can be increased or reduced, depending on needs.

Another aspect that is included in the patent is that the fabric of the light diffuser (14) is kept constantly tensioned and linear also in the presence of intrinsic elasticity of the system and of the fabric with the appropriate use of pretensioning elastic elements. The effect of the heat emitted by the light sources in fact accentuates the elasticity of the fabric and causes creases to form and the fabric to sag, which not only creates undesired aesthetic effects but also makes the lighting module unstable. In order to avoid this drawback, to the prolonging segment (18) (or in the telescopic segments (26)(27)) elastic bands (18a) (or elastic joints (33)) are hooked that are connected to the aeration plate (15). Said elastic bands (18a) and/or elastic joints (33) keep the fabric of the light diffuser (14) constantly tensioned and the aeration plate (15) firmly and stably in a horizontal position.

The advantage of the adopted solution is that the tensions of the elastic bands can easily be adapted to the dimensional failures of the fabric constituting the diffuser (14), keeping the fabric tense over time.

Another advantage resulting from the preceding advantage is that the system prevents the formation of the "flag" effect on the fabric of the light diffuser (14).

Another resulting advantage is that the flexibility of the fabric constituting the light diffuser (14) enables said light diffuser (14) to give way proportionally to the excessive pressure caused by possible strong gusts of wind, noticeably reducing the risk of tears whilst returning to the original position once the effect of the gust of wind has terminated.

### Closing mechanism

Another aspect that is included in the patent is the possibility of easily closing all the lighting module (1) in a narrow space of small dimensions as shown in FIG. 11 which illustrates the status of the closed and non-active lighting module (1), whether it is a module with a single set of LEDs (Fig. 11a) or a module with a double set of LEDs (Fig. 1 1b). When it is desired to deactivate, transport and/or store the lighting module (1) the elastic bands (18a) are unhooked from the aeration plate (15) and the prolonging segment (or segments) (18) is/are removed. The fabric of the diffuser (14) with the dividing wall (14f) fold and compact laterally. The aeration plate (15) and/or the lower support (7) together with all the elements constituting the light source and the fans are positioned on the tubular engaging element (17) such that the entire lighting module (1) is housed in the cap (6) that performs the role of protective container for the transport and/or storage of the invention in a small space.

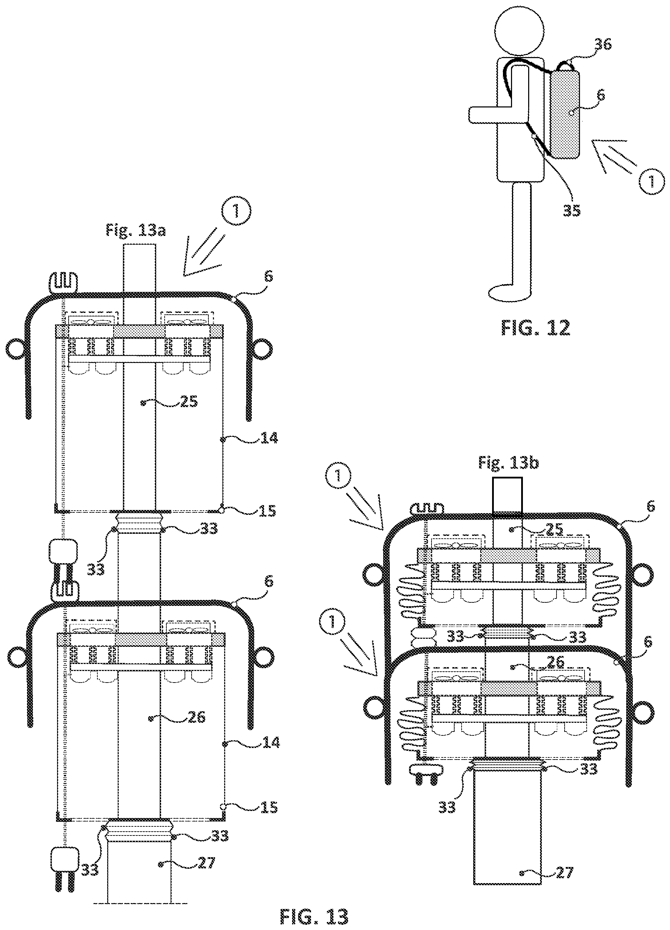

The advantage of the adopted solution is that the module -thus reduced to minimum dimensions - can be transported as illustrated in FIG. 12 where the cap (6) is provided with shoulder straps (35) and handles (36) for transport and movement in places difficult to access where it is necessary to intervene in critical environmental conditions, on difficult terrains and in emergency situations.

### Specificity of telescopic lifting

Another aspect that is included in the patent is that the lighting modules (1) can be installed in manual or hydraulic telescopic stand systems in a case where a lighting column is to be obtained having many modules and thus reaching considerable heights. FIG. 13 illustrates the location of the modules on a telescopic tube - in an operating condition (Fig. 13a) and non-operating condition (Fig. 13b) - in which, for ease of illustration, only two module elements with a single set of LEDs are illustrated by way of non-limiting example for each module. Said telescopic structure is formed by the upper coaxial segment (25), by the lower coaxial segment (26) and by the main segment (27).

In Fig. 13a the lighting modules (1) with the extended fabric are shown. The protection caps (6) of said lighting modules (1) are fixed on the upper coaxial segment (25) and on the lower coaxial segment (26). The aeration plates (15) are anchored by an elastic joint (33) on the lower coaxial segment (26) and on the main segment (27). The upper coaxial segment (25) can freely slide inside the lower coaxial segment (26). Said lower coaxial segment (26) can slide inside the main segment (27).

When the extension of the telescopic structure is activated (manually or mechanically) the upper segment (25) and the lower segment (26) draw the protection caps (6) upwards and the elastic joints (33) retain the aeration plates (15) on the lower coaxial segment (26) and on the main segment (27) so as to activate the complete extension of the fabric (14), the tensioning of which is guaranteed by the elasticity of said joints (33). Fig. 13b illustrates the telescopic system retracted, in which the protection caps (6) are pushed downwards by the lowering action of the telescopic structure, the fabric of the light diffuser (14) folds and compacts and said caps (6) function as a closing cover.

The advantage of this solution is that the weight of the lighting column is distributed along the column, avoiding large disposition of volumes and intense weight at the top. Another resulting advantage is that modules on coaxial tubes of a diameter and thickness lower than those normally used in traditional lighting towers can be used for transport at height.

Another resulting advantage is that once the telescopic tube is retracted, the overall dimensions of the package comprising all the lighting modules are substantially reduced to minimum dimensions.

### Additional supply

The main supply of the light sources is direct current or alternating current from the grid. Nevertheless, another aspect that is included in the patent is that the available spaces inside the engaging segment (17) and the coaxial engaging segment (18) are to be used as specific housings for batteries and rechargeable storage batteries (28).

The recent rapid progress in the sector of photovoltaic panels and batteries for storage of electrical energy is well known. Also known is the constant research for high storage potential combined with very modest dimensions, so that it is possible to use small spaces as seats for said batteries (28).

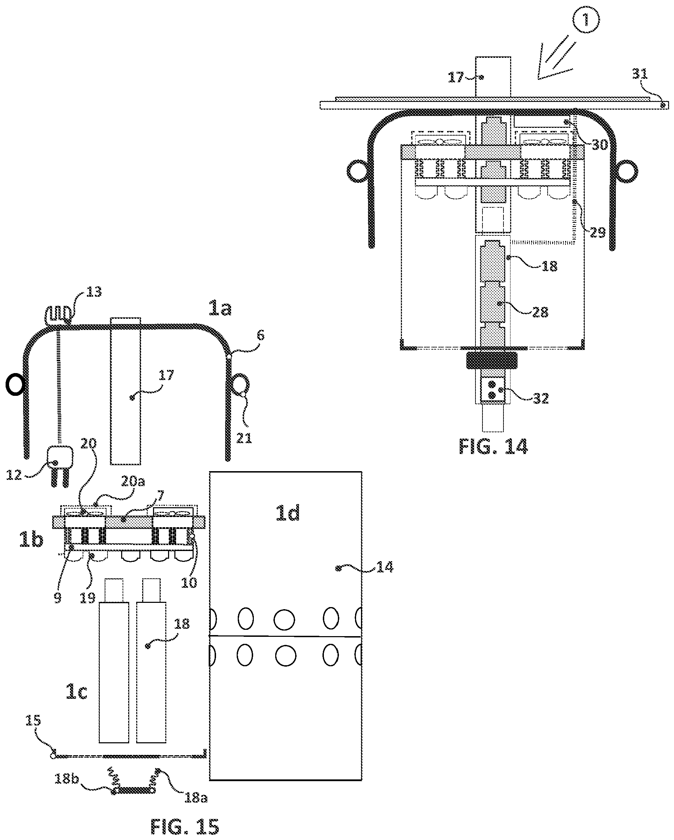

FIG. 14 illustrates - by way of non-limiting example - the spaces, the modes of location and the main components of the battery power system.

The batteries (28) are inserted inside the coaxial engaging segment (18) and the engaging segment (17) and are appropriately connected to one another. The recharging of said batteries (28) takes place via the electric socket (32) present on the coaxial engaging segment (18). Differently - and/or in integration - the photovoltaic panel (31) is inserted on the top of the lighting module (1) and recharges said batteries (28) via an appropriate electrical connection (29). The elements constituting the corresponding equipment can be housed under the cap (6) in suitable containers (30).

The advantage of the adopted solution is that - in addition to be able to supply the sources for a set period of time - in the event of an interruption to the main power supply the batteries can act as a backup power supply to maintain a lighting level of the intensity and for the time necessary to restore normal operating conditions.

### Brief description of the drawings

**FIG. 1**
   [Fig. 1a] [Fig. 1b] [Fig. 1c] illustrate one or more base modules stacked, anchored on the ground and supported by a commercially available tripod.
**FIG. 2**
   [Fig. 2a] [Fig. 2b] [Fig. 2c] illustrate one or more base modules hooked on one another and hanging on a projecting support
**FIG. 3**
   [Fig. 3a] base module equipped with a set of LED light sources positioned at the top [Fig. 3b] plan detail of the aeration plate
**FIG. 4**
   Base module equipped with a set of LED light sources positioned at the bottom
**FIG.5**
   Base module equipped with two sets of LED light sources positioned at the top and bottom
**FIG. 6**
   Forced cooling circuit for cooling radiators by aeration fans (side view)
**FIG. 7**
   Forced cooling circuit along the enclosed conduits of the radiator (plan view)
**FIG. 8**
   Forced cooling circuit for cooling radiators by fans (side view) of a module having a double set of LEDs
**FIG. 9**
   Turbulence effects created by the lack of dividing wall in the light diffuser in the event of a double set of LEDs
**FIG. 10**
   [Fig. 10a] [Fig. 10b] detail of the system connecting the light diffuser to the support and to the aeration plate
**FIG. 11**
   [Fig. 11a] Base lighting module with a set of LEDs in a closed configuration
   [Fig. 11b] Base lighting module with a double set of LEDs in a closed configuration
**FIG. 12**
   Closed lighting module equipped with shoulder straps and handles for transport and movement
**FIG. 13**
   [Fig. 13a] series of open modules stacked on the telescopic tube
   [Fig. 13b] series of closed modules stacked on the telescopic tube
**FIG. 14**
   Positioning of the batteries and photovoltaic panel on the base lighting module

### Best manner to implement the invention

The lighting module (1) consists of four assemblable subgroups indicated in FIG. 15 (1a,1b,1c,1d) consisting of:
- First group (1a): protection cap (6) with engaging segment (17), socket (13), rings (21), socket (13) and plug (12).
- Second group (1b): LED set consisting of a support (7), aeration fans 20, filters (20a), heat dissipating plate (9) with fins (10) and LED (19)
- Third group (1c): prolonging segments (18), catch (24) with hooks (18b) and elastic band (18a), aeration plate (15)
- Fourth group (1d): one or more light diffusers in different dimensions and configurations, shoulder straps (35), handles (36).

The groups can be produced separately and the different composition of said groups (1a,1b,1c,1d) that are easily assemblable to one another give in terms of an industrial result various modules and configurations of the lighting module (1).

## Claims

1. A lighting system comprising one or more LED light sources (19), comprising at least one lighting module (1) stackable on one or more further modules (1) that are the same or similar, to form a lighting column and at least one stand or projecting or support structure (2) in general; each module (1) in turn comprising at least one support (7), at least one heat dissipating plate (9) mounted on said support (7), said one or more light sources (19) mounted on said dissipating plate (9), wherein said at least one support (7) is provided with at least one aeration hole (8) on which at least one aeration fan (20) is arranged for forced cooling of said heat dissipating plate (9), **characterized in that** said dissipating plate (9) comprises heat dissipating fins (10) arranged adhering partially or totally to said support (7) in such a manner that channels (9a) are formed within which - and through which - the forced air that is inserted into said channels (9a) by the action of said aeration fan (20) can circulate freely, and wherein the diameter of the support (7) is greater than the diameter of the heat dissipating plate (9).

2. **The lighting system according to claim 1, characterized in that** it comprises a protection cap (6) mounted on said support (7) and having a diameter that is greater than that of said support (7) so that between said cap (6) and said support (7) a space (11) is defined for the circulation of the air.

3. **The lighting system according to the preceding claims, characterized in that it comprises:**
- at least one engaging segment (17) inserted through said protection cap (6), said support (7) and said heat dissipating plate (9) that is provided with said heat dissipating fins (10);
- at least one tubular prolonging segment (18) or at least one tubular coaxial telescopic segment (26) engaged on said engaging segment (17), for extending and keeping tensioned the first module (1) and stacking a second lighting module (1) after the first.

4. **The lighting system according to any one of the preceding claims, characterized in that** it also comprises at least one light diffuser (14), formed by at least one substantially tubular element.

5. **The lighting system according to the preceding claims, characterized in that** it comprises at least one lower aeration plate (15) anchoring the lower edge of said diffuser (14) and provided with at least one aeration hole (16) and with a central hole (16a) for through and sliding insertion of said prolonging segment (18).

6. **The lighting system according to the preceding claims, characterized in that it comprises:**
- a pair of said supports (7) parallel and spaced out, and wherein said dissipating plates (9) and said light sources (19) are mounted on the faces facing one another of said supports (7);
- said diffuser (14) comprising two of said superimposed substantially tubular elements on the lateral surface of which at least one hole or opening (14e, 14g) is present and wherein said two substantially tubular elements forming said diffuser (14) are separated from one another by at least one dividing wall (14f) provided with a central hole for insertion and sliding of said prolonging segment (18).

7. **The lighting system according to claim 5 or 6, characterized in that** said diffuser (14) is made of fabric and wherein the edges of the upper and lower circumference of said fabric are made with at least one sown thickness (14a/c) or are provided with at least one thickness with a folded insert (14b/c) so that said fabric of the light diffuser (14) can be anchored above said support (7) and below said lower aeration plate (15) or a further support (7) through simple resting and with simple manual pressure without the use of equipment, exploiting the natural flexibility of the material.

8. **The lighting system according to the preceding claim, characterized in that** said fabric constituting the light diffuser (14) is kept tensioned by at least one elastic element, spring (18a) or joint (33) anchored on said aeration plate (15) and/or on said support (7) and on at least one hook, ring, hole or pin (18b) arranged at a suitable distance on the prolonging segment (18) or on coaxial tubes (26) (27) or on a static catch (24).

9. **The lighting system according to one of** the claims 5 to 8, **characterized in that** said diffuser (14) is foldable in length and wherein said protection cap (6) has a sufficient height to contain partially or totally said support (7), said dissipating plate (9), said light sources (19) and said diffuser (14) in a folded configuration, so as to act as a box containing the module (1) in a closed configuration.

10. **The lighting system according to the preceding claims, characterized in that** said protection cap (6) comprises at least one female electrical power supply socket (13) and wherein this socket is usable for supplying a second lighting module (1) stacked on the first one on the engaging segment (17) through a plug (12).

11. **The lighting system according to the preceding claims, characterized in that** said protection cap (6) comprises at least one hole or ring (21) usable for hooking safety braces (3) to the ground or connecting cables between the modules (5) when they are hung on projecting structures (4).

12. **The lighting system according to the preceding claims, characterized in that** said protection cap (6) comprises suitable elements so that at least one handle (36) for manual gripping and shoulder straps (35) for transporting the closed lighting module (1) can be hooked.

13. **The lighting system according to the preceding claims, characterized in that** on the at least one fan (20) or near the at least one fan (20) on said air circulation spaces (11) at least one protection filter or net (20a) is suitably arranged.

14. **The lighting system according to the preceding claims, characterized in that** it comprises at least one battery (28) housed inside said at least one engaging segment (17) and/or said one or more prolonging tubular segments (18), to supply said light sources (19).

15. **The lighting system according to the preceding claim, characterized in that** on the top of the lighting module (1) next to or near said protection cap (6) at least one photovoltaic panel is arranged for charging said battery (28).

## Patentansprüche

1. Beleuchtungssystem mit einer oder mehreren LED-Lichtquellen (19), umfassend mindestens ein Beleuchtungsmodul (1), das auf einem oder mehreren weiteren, identischen oder ähnlichen Modulen (1) stapelbar ist, um eine Beleuchtungssäule und mindestens einen Ständer oder eine vorstehende oder tragende Struktur (2) im Allgemeinen zu bilden; wobei jedes Modul (1) seinerseits mindestens eine Halterung (7), mindestens eine auf der besagten Halterung (7) montierte wärmeableitende Platte (9) und die besagte eine oder die besagten mehreren auf der wärmeableitenden Platte (9) montierte/n Lichtquellen (19) umfasst, wobei die besagte mindestens eine Halterung (7) mit mindestens einer Belüftungsöffnung (8) versehen ist, auf der mindestens ein Belüftungsventilator (20) zur forcierten Kühlung der besagten wärmeableitenden Platte (9) angeordnet ist, **dadurch gekennzeichnet, dass** die besagte wärmeableitende Platte (9) wärmeableitende Rippen (10) umfasst, die so angeordnet sind, dass sie teilweise oder vollständig an der besagten Halterung (7) haften, sodass Kanäle (9a) gebildet werden, in denen - und durch die - die forcierte Luft, die durch die Wirkung des besagten Belüftungsventilators (20) in die besagten Kanäle (9a) eingeführt wird, frei zirkulieren kann, und wobei der Durchmesser der Halterung (7) größer ist als der Durchmesser der wärmeableitenden Platte (9).

2. **Beleuchtungssystem nach Patentanspruch 1, dadurch gekennzeichnet, dass** es eine Schutzkappe (6) umfasst, die auf der besagten Halterung (7) angebracht ist und einen Durchmesser aufweist, der größer ist als der Durchmesser der besagten Halterung (7), sodass zwischen der besagten Kappe (6) und der besagten Halterung (7) ein Raum (11) für die Luftzirkulation definiert ist.

3. **Beleuchtungssystem nach den vorhergehenden Patentansprüchen, dadurch gekennzeichnet, dass es folgende Elemente umfasst:**
- mindestens ein Eingriffssegment (17), das durch die besagte Schutzkappe (6), die besagte Halterung (7) und die besagte wärmeableitende Platte (9), die mit den besagten wärmeableitenden Rippen (10) versehen ist, eingeführt wird;
- mindestens ein röhrenförmiges Verlängerungssegment (18) oder mindestens ein röhrenförmiges koaxiales Teleskopsegment (26), das mit dem besagten Eingriffssegment (17) in Eingriff steht, um das erste Modul (1) zu verlängern und gespannt zu halten und ein zweites Beleuchtungsmodul (1) nach dem ersten zu stapeln.

4. **Beleuchtungssystem nach jeglichem der vorhergehenden Patentansprüche, dadurch gekennzeichnet, dass** es außerdem mindestens einen Lichtdiffusor (14) umfasst, der aus mindestens einem im Wesentlichen röhrenförmigen Element besteht.

5. **Beleuchtungssystem nach den vorhergehenden Patentansprüchen, dadurch gekennzeichnet, dass** es mindestens eine untere Belüftungsplatte (15) umfasst, die den unteren Rand des besagten Diffusors (14) verankert und mit mindestens einer Belüftungsöffnung (16) und mit einer mittigen Öffnung (16a) zum durchgehenden und gleitenden Einführen des besagten Verlängerungssegments (18) versehen ist.

6. **Beleuchtungssystem nach den vorhergehenden Patentansprüchen, dadurch gekennzeichnet, dass es folgende Elemente umfasst:**
- ein Paar der besagten Halterungen (7), die parallel und beabstandet sind, und wobei die besagten wärmeableitenden Platten (9) und die besagten Lichtquellen (19) an den einander zugewandten Flächen der besagten Halterungen (7) montiert sind;
- den besagten Diffusor (14), der zwei der besagten übereinanderliegenden, im Wesentlichen röhrenförmigen Elemente umfasst, auf deren Seitenfläche mindestens ein Loch oder eine Öffnung (14e, 14g) vorhanden ist, und wobei die besagten zwei im Wesentlichen röhrenförmigen Elemente, die den besagten Diffusor (14) bilden, durch mindestens eine Trennwand (14f) voneinander getrennt sind, die mit einer mittigen Öffnung zum Einführen und Gleiten des besagten Verlängerungssegments (18) versehen ist.

7. **Beleuchtungssystem nach Patentanspruch 5 oder 6, dadurch gekennzeichnet, dass** der besagte Diffusor (14) aus Stoff hergestellt ist, und wobei die Ränder des oberen und unteren Umfangs des besagten Stoffes mit mindestens einer genähten Dicke (14a/c) hergestellt sind oder mit mindestens einer Dicke mit einer gefalteten Einlage (14b/c) versehen sind, sodass der besagte Stoff des Lichtdiffusors (14) oberhalb der besagten Halterung (7) und unterhalb der besagten unteren Belüftungsplatte (15) oder einer weiteren Halterung (7) durch einfaches Auflegen und mit einfachem manuellen Druck ohne die Verwendung von Ausrüstung, durch die Ausnutzung der natürlichen Biegsamkeit des Materials, verankert werden kann.

8. **Beleuchtungssystem nach dem vorhergehenden Patentanspruch, dadurch gekennzeichnet, dass** der besagte den Lichtdiffusor (14) bildende Stoff durch mindestens ein elastisches Element, eine Feder (18a) oder ein Gelenk (33), das auf der besagten Belüftungsplatte (15) und/oder auf der besagten Halterung (7) verankert ist, und auf mindestens einem Haken, einem Ring, einer Öffnung oder einem Stift (18b), angeordnet in einem geeigneten Abstand auf dem Verlängerungssegment (18) oder auf koaxialen Rohren (26) (27) oder auf einer statischen Sperre (24), unter Spannung gehalten wird.

9. **Beleuchtungssystem nach einem der Patentansprüche 5 bis 8, dadurch gekennzeichnet, dass** der besagte Diffusor (14) in der Länge faltbar ist, und wobei die besagte Schutzkappe (6) eine ausreichende Höhe hat, um die besagte Halterung (7), die besagte wärmeableitenden Platte (9), die besagten Lichtquellen (19) und den besagten Diffusor (14) in einer gefalteten Konfiguration teilweise oder vollständig zu enthalten, sodass sie als ein Kasten wirkt, der das Modul (1) in einer geschlossenen Konfiguration enthält.

10. **Beleuchtungssystem nach den vorhergehenden Patentansprüchen, dadurch gekennzeichnet, dass** die besagte Schutzkappe (6) mindestens eine Buchse (13) für die Stromversorgung umfasst und wobei diese Buchse zur Versorgung eines zweiten Beleuchtungsmoduls (1), das auf das erste Modul auf dem Eingriffssegment (17) gestapelt wird, durch einen Stecker (12) verwendet werden kann.

11. **Beleuchtungssystem nach den vorhergehenden Patentansprüchen, dadurch gekennzeichnet, dass** die besagte Schutzkappe (6) mindestens eine Öffnung oder einen Ring (21) aufweist, der zum Einhaken von Sicherheitsstreben (3) in den Boden oder zur Verbindung von Kabeln zwischen den Modulen (5) verwendet werden kann, wenn diese an vorstehenden Strukturen (4) aufgehängt sind.

12. **Beleuchtungssystem nach den vorhergehenden Patentansprüchen, dadurch gekennzeichnet, dass** die besagte Schutzkappe (6) geeignete Elemente dergestalt aufweist, dass mindestens ein Handgriff (36) zum manuellen Greifen und Schultergurte (35) zum Transportieren des geschlossenen Beleuchtungsmoduls (1) eingehängt werden können.

13. **Beleuchtungssystem nach den vorhergehenden Patentansprüchen, dadurch gekennzeichnet, dass** an dem mindestens einen Ventilator (20) oder in der Nähe des mindestens eines Ventilators (20) an den besagten Luftzirkulationsräumen (11) mindestens ein Schutzfilter oder -netz (20a) in geeigneter Weise angeordnet ist.

14. **Beleuchtungssystem nach den vorhergehenden Patentansprüchen, dadurch gekennzeichnet, dass** es mindestens eine Batterie (28) umfasst, die im Inneren des besagten mindestens einen Eingriffssegments (17) und/oder des besagten einen oder der besagten mehreren röhrenförmigen Verlängerungssegmente (18) untergebracht ist, um die besagten Lichtquellen (19) zu versorgen.

15. **Beleuchtungssystem nach dem vorhergehenden Patentanspruch, dadurch gekennzeichnet, dass** auf der Oberseite des Beleuchtungsmoduls (1) neben oder in der Nähe der besagten Schutzkappe (6) mindestens ein Photovoltaik-Panel zum Laden der besagten Batterie (28) angeordnet ist.

## Revendications

1. Système d'éclairage comprenant une ou plusieurs sources lumineuses LED (19), comprenant au moins un module d'éclairage (1) empilable sur un ou plusieurs autres modules (1) identiques ou similaires, pour former une colonne lumineuse et au moins un support ou une structure de projection ou de soutien (2) en général ; chaque module (1) comprend à son tour au moins un support (7), au moins une plaque de dissipation de chaleur thermique (9) montée sur ledit support (7), une ou plusieurs sources lumineuses (19) montées sur ladite plaque de dissipation de chaleur thermique (9), où ledit au moins un support (7) est pourvu d'au moins un trou d'aération (8) sur lequel au moins un ventilateur d'aération (20) est disposé pour le refroidissement forcé de ladite plaque de dissipation de chaleur thermique (9), **caractérisé en ce que** ladite plaque de dissipation de chaleur thermique (9) comprend des ailettes de dissipation de chaleur (10) disposées en adhérant partiellement ou totalement audit support (7) de manière à former des canaux (9a) à l'intérieur desquels - et à travers lesquels - l'air forcé qui est introduit dans lesdits canaux (9a) par l'action dudit ventilateur d'aération (20) peut circuler librement, et où le diamètre du support (7) est supérieur au diamètre de la plaque de dissipation de chaleur thermique (9).

2. **Le système d'éclairage selon la revendication 1, caractérisé en ce qu'**il comprend un capuchon de protection (6) monté sur ledit support (7) et ayant un diamètre supérieur à celui dudit support (7) de sorte qu'entre ledit capuchon (6) et ledit support (7) un espace (11) est défini pour la circulation de l'air.

3. **Le système d'éclairage selon les revendications précédentes, caractérisé en ce qu'il comprend :**
- au moins un segment d'engagement (17) inséré à travers ledit capuchon de protection (6), ledit support (7) et ladite plaque de dissipation de chaleur thermique (9) qui est pourvue desdites ailettes de dissipation thermique (10) ;
- au moins un segment de prolongation tubulaire (18) ou au moins un segment télescopique coaxial tubulaire (26) engagé sur ledit segment d'engagement (17), pour étendre et maintenir tendu le premier module (1) et empiler un deuxième module d'éclairage (1) après le premier.

4. **Le système d'éclairage selon l'une quelconque des revendications précédentes, caractérisé en ce qu'**il comprend également au moins un diffuseur de lumière (14), formé par au moins un élément essentiellement tubulaire.

5. **Le système d'éclairage selon les revendications précédentes, caractérisé en ce qu'**il comprend au moins une plaque d'aération inférieure (15) ancrée au bord inférieur dudit diffuseur (14) et pourvue d'au moins un trou d'aération (16) et d'un trou central (16a) pour l'insertion passante et coulissante dudit segment de prolongation (18).

6. **Le système d'éclairage selon les revendications précédentes, caractérisé en ce qu'il comprend :**
- une paire desdits supports (7) parallèles et espacés, et où lesdites plaques de dissipation de chaleur thermique (9) et lesdites sources lumineuses (19) sont montées sur les faces opposées des supports (7) ;
- ledit diffuseur (14) comprenant deux desdits éléments essentiellement tubulaires superposés sur la surface latérale desquels se trouve au moins un trou ou une ouverture (14e, 14g) et où lesdits deux éléments essentiellement tubulaires formant ledit diffuseur (14) sont séparés l'un de l'autre par au moins une paroi de séparation (14f) pourvue d'un trou central pour l'insertion et le coulissement dudit segment de prolongement (18) .

7. **Le système d'éclairage selon la revendication 5 ou 6, caractérisé en ce que** ledit diffuseur (14) est réalisé en tissu et **en ce que** les bords de la circonférence supérieure et inférieure dudit tissu sont constitués d'au moins une épaisseur cousue (14a/c) ou sont pourvus d'au moins une épaisseur avec un insert plié (14b/c) de sorte que ledit tissu du diffuseur de lumière (14) peut être ancré au-dessus dudit support (7) et au-dessous de ladite plaque d'aération (15) ou d'un autre support (7) par simple appui et avec une simple pression manuelle sans l'utilisation d'un équipement, en exploitant la flexibilité naturelle du matériau.

8. **Le système d'éclairage selon la revendication précédente, caractérisé en ce que** ledit tissu constituant le diffuseur de lumière (14) est maintenu tendu par au moins un élément élastique, ressort (18a) ou articulation (33), ancré sur ladite plaque d'aération (15) et/ou sur ledit support (7) et sur au moins un crochet, anneau, trou ou goupille (18b) disposé à une distance appropriée sur le segment de prolongement (18) ou sur des tubes coaxiaux (26) (27) ou sur un arrêt statique (24).

9. **Le système d'éclairage selon l'une quelconque des revendications de 5 à 8, caractérisé en ce que** ledit diffuseur (14) est repliable en longueur et où ledit capuchon de protection (6) présente une hauteur suffisante pour contenir, partiellement ou totalement, ledit support (7), ladite plaque de dissipation de chaleur thermique (9), lesdites sources lumineuses (19) et ledit diffuseur (14) dans une configuration pliée, de manière à agir comme une boîte contenant le module (1) dans une configuration fermée.

10. **Le système d'éclairage selon les revendications précédentes, caractérisé en ce que** ledit capuchon de protection (6) comprend au moins une prise d'alimentation électrique femelle (13) et où cette prise peut être utilisée pour alimenter un deuxième module d'éclairage (1) empilé sur le premier sur le segment d'engagement (17) par l'intermédiaire d'une fiche (12).

11. **Le système d'éclairage selon les revendications précédentes, caractérisé en ce que** ledit capuchon de protection (6) comprend au moins un trou ou un anneau (21) utilisable pour accrocher au sol les étriers de sécurité (3) ou les câbles de connexion entre les modules (5) lorsqu'ils sont accrochés à des structures en saillie (4).

12. **Le système d'éclairage selon les revendications précédentes, caractérisé en ce que** ledit capuchon de protection (6) comprend des éléments adaptés permettant d'accrocher au moins une poignée (36) pour la préhension manuelle et des bretelles (35) pour le transport du module d'éclairage fermé (1).

13. **Le système d'éclairage selon les revendications précédentes, caractérisé en ce que** sur l'au moins un ventilateur (20) ou à proximité du au moins un ventilateur (20) sur lesdits espaces de circulation d'air (11), au moins un filtre ou filet de protection (20a) est disposé de manière appropriée.

14. **Le système d'éclairage selon les revendications précédentes, caractérisé en ce qu'**il comprend au moins une batterie (28) logée à l'intérieur dudit au moins un segment d'engagement (17) et/ou dudit un ou plusieurs segments de prolongement tubulaires (18), pour alimenter lesdites sources lumineuses (19).

15. **Le système d'éclairage selon la revendication précédente, caractérisé en ce que** sur la partie supérieure du module d'éclairage (1), à côté ou près du capuchon de protection (6), au moins un panneau photovoltaïque est disposé pour charger ladite batterie (28).
